# EUROPÄISCHE PATENTSCHRIFT

(11) **EP 2 348 251 B1**
(45) Veröffentlichungstag und Bekanntmachung des Hinweises auf die Patenterteilung: **27.09.2017**
(21) Anmeldenummer: 10171109.1
(22) Anmeldetag: 28.07.2010
(51) Int. Cl.: A47J 31/54, F24H 1/14, F24H 1/16, H05B 3/42, F22B 1/28, F22B 1/30, F22B 35/10

(54) **Vorrichtung zum Erhitzen einer Flüssigkeit und Verfahren zur Herstellung einer Heizvorrichtung zum Erhitzen einer Flüssigkeit**
Device for heating a liquid and method for producing a heating device for heating a liquid
Dispositif de chauffage d'un liquide et procédé de fabrication d'un dispositif de chauffage pour le chauffage d'un liquide

(30) Priorität: 04.08.2009 DE 102009036070
(43) Veröffentlichungstag der Anmeldung: 27.07.2011
(73) Patentinhaber: Eichenauer Heizelemente GmbH & Co. KG, 76870 Kandel (DE)
(72) Erfinder: Kitt, Rudi, 76836, Herxheim-Hayna (DE); Lang, Armin, 76889, Barbelroth (DE); Kleemann, Martin, 67125, Dannstadt (DE)
(74) Vertreter: Hofstetter, Schurack & Partner

(56) Entgegenhaltungen:
- DE-A1-102008 046 471
- DE-U1- 29 805 226
- DE-U1-202006 015 593
- DE-U1-202007 017 796
- US-A- 2 515 835
- US-A- 4 246 871

## Beschreibung

Die vorliegende Erfindung betrifft eine Vorrichtung zum Erhitzen einer Flüssigkeit mit mindestens einem Rohr zum Führen der Flüssigkeit, und mindestens einem ersten und einem zweiten Rohrheizkörper, wobei jeder Rohrheizkörper eine Kopplungsfläche in Längsrichtung aufweist, wobei das Rohr zur Übertragung von Wärmeenergie vom ersten und zweiten Rohrheizkörper auf das Rohr mit dem ersten und dem zweiten Rohrheizkörper gekoppelt ist. Sie betrifft überdies ein entsprechendes Verfahren zur Herstellung einer Heizvorrichtung zum Erhitzen einer Flüssigkeit.

Aus der EP 1 321 708 A1 ist es bekannt, auf ein abgeflachtes Durchflussrohr beidseitig in Längsrichtung einen Rohrheizkörper aufzulöten. Dadurch kann, im Vergleich zu nur einem aufgelöteten Rohrheizkörper, eine größere Leistung auf das Durchflussrohr übertragen werden, wodurch eine Erhitzung der Flüssigkeit auch über den Siedepunkt hinaus, bei gleichzeitig kompakter Ausgestaltung möglich ist. Außerdem ermöglicht die Verwendung von zwei Rohrheizkörpern unterschiedliche Beschaltungen wie Einzel-, Reihen- oder Parallelschaltung und dadurch das Auswählen verschiedener Leistungsstufen.

Nachteilig an dieser bekannten Lösung ist jedoch, dass es bei Verwendung von unterschiedlichen Materialien für die Rohrheizkörper und das Durchflussrohr, die unterschiedliche Wärmeausdehnungskoeffizienten aufweisen, zu einem Abreißen der Rohrheizkörper kommen kann.

Die DE 10 2008 046 471 A1 betrifft einen Dampfgenerator, bei dem ein gewendeltes Heizrohr, in dem eine Flüssigkeit geführt wird, in eine Nut eines Kerns eingeschraubt ist. Mehrere Stabheizkörper sind koaxial im Kern angeordnet, ebenso wie ein dort zentral vorgesehener Temperatursensor. Die gesamte Anordnung ist von einem Klemmrohr umgeben, um ein Anpressen des Heizrohrs auf dem Kern und damit eine gute Wärmeübertragung zu ermöglichen. Die Stabheizkörper sind nicht mit ihrer jeweiligen Kopplungsfläche miteinander gekoppelt, sondern sind in einem Kern aus Wärme leitendem Material angeordnet.

Aus der US 4,246,871 ist eine Vorrichtung zum Verdampfen einer Flüssigkeit bekannt, bei der eine zylindrische Metallhelix, die aus einem durchgehenden Rohr mit einem kleinen Durchmesser geformt ist, um einen Heizkörper angeordnet ist. Die Helixwindungen sind miteinander verlötet. Als Heizkörper kann eine auf einem elektrischen Heizwiderstand basierende Heizpatrone Verwendung finden. Allerdings ist der verwendete Heizkörper einstückig ausgebildet. Er wird nach Bereitstellen der Helix und Auskleiden der Helix mit einem temperaturleitfähigen Material in die Helix eingeschoben.

Die DE 20 2006 015 593 U1 beschreibt eine Vorrichtung zum Erhitzen einer Flüssigkeit. Die Flüssigkeit wird dabei in einem Rohr geführt, wobei dieses Rohr mit wenigstens zwei Heizeinrichtungen in Kontakt steht. Die Heizkörper sind außerhalb des Durchflussrohrs vorgesehen, wobei der Wirkungsgrad dadurch maximiert wird, dass zwischen den Heizeinrichtungen und dem Durchflussrohr eine Diffusionsplatte aus gut wärmeleitfähigem Material angeordnet ist.

Die vorliegenden Erfindung liegt deshalb die Aufgabe zugrunde, eine gattungsgemäße Vorrichtung bzw. ein gattungsgemäßes Verfahren derart weiterzubilden, dass ein Erhitzen der Flüssigkeit auch bei hoher Heizleistung und unterschiedlichen Wärmeausdehnungskoeffizienten der verwendeten Materialien zuverlässig gewährleistet werden kann.

Diese Aufgabe wird gelöst durch eine Vorrichtung mit den Merkmalen von Patentanspruch 1 sowie durch ein Verfahren mit den Merkmalen von Patentanspruch 15.

Der vorliegenden Erfindung liegt die Erkenntnis zugrunde, dass ein Abreißen von Rohrheizkörpern und Rohr selbst bei stark unterschiedlichen Wärmeausdehnungskoeffizienten zuverlässig verhindert werden kann, wenn die Montage von Rohrheizkörpern und Rohr derart erfolgt, dass sich die beiden Längsausdehnungsrichtungen voneinander unterscheiden. Durch die unterschiedliche Längsausdehnungsrichtung von Rohrheizkörpern und Rohr kann sich das Rohr weitgehend unabhängig vom Rohrheizkörper ausdehnen. Die beiden Hauptausdehnungsrichtungen sind nicht mehr aneinander gekoppelt. Da die Längserstreckung von einer Ausdehnung infolge von Temperaturänderungen aufgrund der größten Dimension am meisten betroffen ist, und sich damit unterschiedliche Wärmeausdehnungskoeffizienten am meisten auswirken, geht daher die Erfindung zur Lösung des oben genannten Problems den Weg, die beiden Längsrichtungen der Rohrkörper sowie des Rohrs im Wesentlichen senkrecht zueinander anzuordnen.

Bei einer bevorzugten Ausführungsform umfasst die Kopplungsfläche des ersten Rohrheizkörpers eine erste Kontur und die Kopplungsfläche des zweiten Rohrheizkörpers eine zweite Kontur, wobei die erste und die zweite Kontur aneinander angepasst sind. Auf diese Weise wird eine sehr gute Wärmeübertragung vom ersten auf den zweiten Rohrheizkörper und umgekehrt sichergestellt. Dies führt dazu, dass auch dann, wenn nur ein Rohrheizkörper in Betrieb ist, beispielsweise bei einer geringen Heizstufe, eine gleichmäßige Erwärmung der im Rohr geführten Flüssigkeit sichergestellt werden kann. Dadurch kann ein unerwünschtes Verdampfen vermieden und dennoch die Zeit zum Erhitzen der Flüssigkeit möglichst kurz gehalten werden.

Besonders bevorzugt ist die Kopplungsfläche des ersten Rohrheizkörpers und die Kopplungsfläche des zweiten Rohrheizkörpers eben ausgebildet. Ebene Flächen sind kostengünstig herzustellen und ermöglichen einen sehr guten thermischen Kontakt zwischen dem ersten und dem zweiten Rohrheizkörper.

In vorteilhafter Weise ist der erste und der zweite Rohrheizkörper miteinander verlötet. Auf diese Weise wird einerseits eine zuverlässige Kopplung des ersten mit dem zweiten Rohrheizkörper sichergestellt, andererseits kann - im Vergleich zum Verkleben - auch die Lötverbindung zur Wärmeübertragung beitragen.

Bei einer bevorzugten Ausführungsform weist eine Kombination, die den ersten und den zweiten Rohrheizkörper umfasst, zumindest abschnittsweise eine Querschnittsfläche quer zur Längsrichtung des ersten und des zweiten Rohrheizkörpers auf, die oval, elliptisch oder rund ist. Im Hinblick darauf, dass erfindungsgemäß das mindestens eine Rohr eine Vielzahl von Windungen aufweist, ist eine derartige Ausgestaltung der Querschnittsfläche besonders bevorzugt, da Windungen mit ovalem, elliptischem oder rundem Innendurchmesser besonders einfach herzustellen sind und dann aufgrund der identischen Form der Außenfläche der kombinierten Rohrheizkörper sowie der Innenfläche der Windungen eine ausgezeichnete Wärmeübertragung und Fixierung sichergestellt werden kann.

Bevorzugt ist das Rohr mit dem ersten und/oder dem zweiten Rohrheizkörper zum Zwecke der Fixierung zumindest abschnittsweise verlötet. Dies eröffnet die Möglichkeit, das Verlöten der Rohrheizkörper miteinander sowie das Verlöten des Rohrs mit den Rohrheizkörpern in einem Schritt vorzunehmen. Dies garantiert einerseits eine zuverlässige Verbindung, fördert andererseits den Wärmeaustausch und bietet schließlich genügend Freiraum für eine Ausdehnung des Rohrs gegenüber den Rohrheizkörpern.

Bei einer bevorzugten Ausführungsform ist zwischen den ersten und den zweiten Rohrheizkörper eine Kopplungsvorrichtung gekoppelt. Dabei kann die Kopplungsvorrichtung ein thermisches Isolationselement, insbesondere ein Keramikelement darstellen. Für spezielle Anwendungen lässt sich hierdurch eine gezielte wärmeseitige Isolation der Rohrheizkörper voneinander bewirken. In diesem Fall sind die beiden Rohrheizkörper auch nicht miteinander verlötet, sondern werden insbesondere bis nach dem Anbringen des Rohrs durch Klammern oder Kleben mit der Kopplungsvorrichtung verbunden. Für Anwendungen, bei denen sichergestellt werden soll, dass lediglich von einem der beiden Rohrheizkörper Wärmeenergie auf das Rohr übertragen wird, lässt sich hierdurch eine zuverlässige Funktion gewährleisten.

Die Kopplungsvorrichtung kann jedoch auch ein thermisches Kopplungselement, insbesondere ein Metallelement darstellen. Bevorzugt ist ein derartiges Kopplungselement aus einem Material gefertigt, das einen ähnlichen oder gleichen Wärmeausdehnungskoeffizienten wie die Rohrheizkörper aufweist. Weiterhin bevorzugt ist ein derartiges Kopplungselement mit den beiden Rohrheizkörpern verlötet. Dadurch verteilt sich die Wärme gleichmäßig auch bei Beschaltung nur eines Rohrheizkörpers oder beider Rohrheizkörper mit unterschiedlicher Leistung über die gesamte Oberfläche beider Rohrheizkörper, so dass eine einheitliche und große Wärmeaustauschfläche zur Verfügung steht. Bevorzugt wird die Kopplungsvorrichtung nach dem Umwickeln der Rohrheizkörper mit dem Rohr zwischen die Rohrheizkörper eingeschoben. Da insbesondere bei Verwendung eines Rohrs aus Edelstahl eine Federwirkung des Materials die Windungen nach dem Wickeln wieder etwas aufspringen lässt, dient das Kopplungselement hier zur Vergrößerung des gemeinsamen Umfangs der Rohrheizkörper und damit zum Anpassen an das gewickelte Rohr.

Bevorzugt umfasst die Vorrichtung weiterhin einen Temperatursensor. Dies ermöglicht die Überwachung oder Regelung der Temperatur, um Schäden oder ein vorzeitiges Verkalken der Vorrichtung zu verhindern. Der Temperatursensor ist bevorzugt mit dem ersten und dem zweiten Rohrheizkörper thermisch gekoppelt. Dabei ist der Temperatursensor gemäß einer ersten Variante auf dem ersten und dem zweiten Rohrheizkörper angeordnet. Gemäß einer zweiten Variante ist der Temperatursensor auf einem thermischen Übertragungselement angeordnet, wobei das thermische Übertragungselement mit dem ersten und dem zweiten Rohrheizkörper thermisch gekoppelt ist, insbesondere auf dem ersten und dem zweiten Rohrheizkörper angeordnet ist. Durch die Kopplung mit beiden Rohrheizkörpern ergibt sich der Vorteil, dass ein einziger Temperatursensor zur Überwachung ausreichend ist.

Alternativ kann der Temperatursensor auch mit dem Rohr thermisch gekoppelt sein. Dadurch kann besonders zuverlässig ein "Trockengehen" des Rohrs überwacht werden.

Hinsichtlich der Montage der Windungen sind bei einer ersten Variante mindestens zwei Windungen der Vielzahl von Windungen des Rohrs voneinander beabstandet angeordnet. Bevorzugt beträgt der Abstand hierbei mindestens die Hälfte des Rohrdurchmessers. Auf diese Weise kann eine bessere und besonders einfache Verlötung erreicht werden.

Bei einer zweiten Variante sind hingegen mindestens zwei Windungen der Vielzahl von Windungen des Rohrs aneinander anliegend angeordnet. Dadurch kann die Lötverbindung zwischen Rohr und Rohrheizkörpern auch auf benachbarte Windungen ausgedehnt werden, so dass benachbarte Windungen ebenfalls direkt miteinander verlötet werden. Dies erlaubt die Einsparung eines Montageschritts und resultiert daher in einer Zeit- und Kostenersparnis.

Das Rohr kann insbesondere als Rundrohr oder als Flachrohr ausgebildet sein. Bei der letztgenannten Variante ergibt sich eine große Kontaktfläche zwischen dem Rohr und den Rohrheizkörpern, so dass eine exzellente Wärmeübertragung sichergestellt werden kann.

Wenngleich der erste und der zweite Rohrheizkörper gleiche Heizleistungen aufweisen können, so kann auch eine Ausführungsform vorgesehen sein, bei der der erste und der zweite Rohrheizkörper unterschiedliche Heizleistungen aufweisen. Insbesondere in Kombination mit einer Steuervorrichtung lassen sich eine Vielzahl unterschiedlicher Leistungsstufen erzielen, wobei die Steuervorrichtung ausgebildet ist, den ersten und den zweiten Rohrheizkörper zumindest gemäß einem der folgenden Schaltzustände zu betreiben: der erste Rohrheizkörper ist eingeschaltet und der zweite Rohrheizkörper ist ausgeschaltet; der erste Rohrheizkörper ist ausgeschaltet und der zweite Rohrheizkörper ist eingeschaltet; der erste und der zweite Rohrheizkörper sind in Serie geschaltet; der erste und der zweite Rohrheizkörper sind parallel geschaltet. Damit wird eine besonders energieeffiziente Anpassung an die Art und Menge der zu erhitzenden Flüssigkeit ermöglicht.

Gemäß einem zweiten Aspekt der vorliegenden Erfindung betrifft diese eine Kaffeemaschine mit einer Vorrichtung nach einem der vorhergehenden Ansprüche.

Die mit Bezug auf eine erfindungsgemäße Vorrichtung vorgestellten bevorzugten Ausführungsformen und deren Vorteile gelten entsprechend, soweit anwendbar, für das erfindungsgemäße Verfahren zur Herstellung einer Heizvorrichtung zum Erhitzen einer Flüssigkeit.

Die mit Bezug auf die erfindungsgemäße Vorrichtung vorgestellten bevorzugten Ausführungsformen und deren Vorteile gelten entsprechend, soweit anwendbar, für eine erfindungsgemäße Kaffeemaschine.

Weitere vorteilhafte Ausführungsformen und deren Vorteile ergeben sich aus den Unteransprüchen.

Im Nachfolgenden werden nunmehr Ausführungsbeispiele der vorliegenden Erfindung unter Bezugnahme auf die beigefügten Zeichnungen näher beschrieben. Es zeigen:
- Fig. 1: in schematischer Darstellung eine Seitenansicht einer erfindungsgemäßen Vorrichtung;
- Fig. 2: in schematischer Darstellung einen Längsschnitt durch die in Fig. 1 dargestellte Vorrichtung;
- Fig. 3: in schematischer Darstellung einen Querschnitt durch die in Fig. 1 dargestellte Vorrichtung gemäß einer ersten Variante;
- Fig. 4: in schematischer Darstellung einen Querschnitt durch die in Fig. 1 dargestellte Vorrichtung gemäß einer zweiten Variante;
- Fig. 5: in schematischer Darstellung den Querschnitt durch eine auf einem Rohrheizkörper aufgelötete Windung einer erfindungsgemäßen Vorrichtung; und
- Fig. 6: in schematischer Darstellung einen Längsschnitt durch eine erfindungsgemäße Vorrichtung gemäß einem zweiten Ausführungsbeispiel.

Im Nachfolgenden werden für die Beschreibung unterschiedlicher Ausführungsbeispiele für gleiche und gleich wirkende Bauelemente dieselben Bezugszeichen verwendet. Diese werden nur einmal eingeführt.

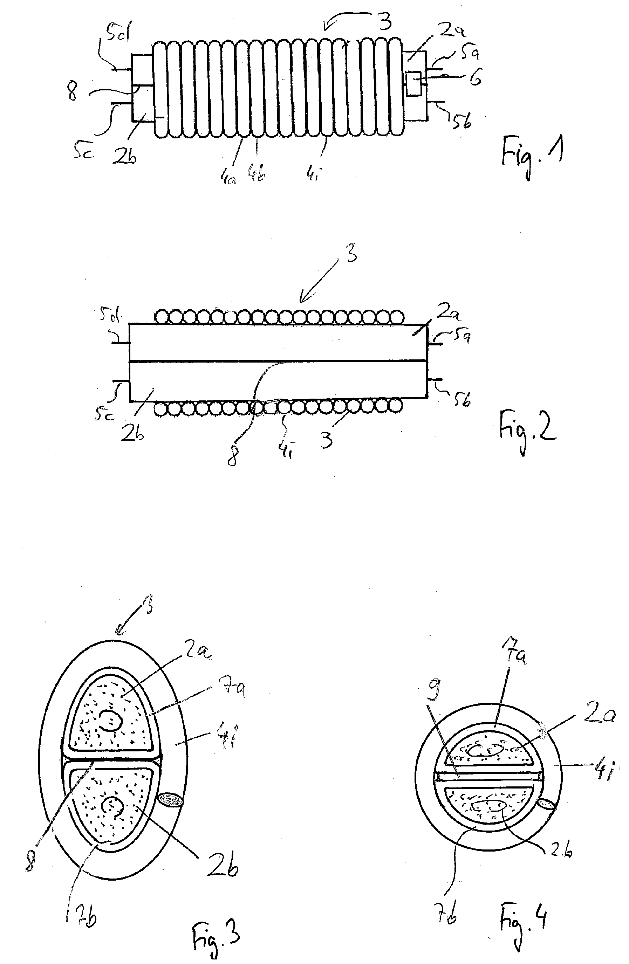

Fig. 1 und Fig. 2 zeigen in schematischer Darstellung ein erstes Ausführungsbeispiel einer erfindungsgemäßen Vorrichtung. Dabei zeigt Fig. 1 eine Seitenansicht, Fig. 2 einen Längsschnitt. Ein erster Rohrheizkörper 2a und ein zweiter Rohrheizkörper 2b weisen jeweils eine Kopplungsfläche 8 in Längsrichtung auf und sind entlang dieser Kopplungsfläche verlötet. Um die beiden Rohrheizkörper 2a, 2b ist ein Durchflussrohr 3 für eine zu erhitzende Flüssigkeit angeordnet, wobei das Durchflussrohr 3 eine Vielzahl von Windungen 4a, 4b, 4i aufweist. Das Durchflussrohr 3 ist als Edelstahlrohr ausgeführt und ist abschnittsweise mit den Rohrheizkörpern 2a, 2b verlötet. Die Rohrheizkörper 2a, 2b weisen Anschlusselemente 5a bis 5d auf zur Zuführung von elektrischer Energie. Wenngleich vorliegend die Enden der Rohrheizkörper 2a, 2b aneinander anliegen, können diese abweichend von der Darstellung in Fig. 1 auch voneinander weggebogen und bevorzugt unverpresst, das heißt rund ausgeführt sein, um das Anschließen über die Anschlusselemente 5a bis 5d zu erleichtern. An einem Ende der Rohrheizkörper 2a, 2b ist ein Temperatursensor 6 in wärmeleitender Verbindung zu den Rohrheizkörpern 2a, 2b angeordnet. An dem Ausführungsbeispiel von Fig. 1 ist der Temperatursensor 6 mittig zwischen den beiden Rohrheizkörpern 2a, 2b angeordnet und mit beiden Rohrheizkörpern 2a, 2b verbunden. Wie aus Fig. 2 hervorgeht, weist das Durchflussrohr 3 einen runden Querschnitt auf. In dem Ausführungsbeispiel von Fig. 1 und Fig. 2 liegen die Windungen 4a, 4b, 4i des Durchflussrohrs 3 aneinander an. Der Begriff "Rohrheizkörper" umfasst im Rahmen der vorliegenden Erfindung auch so genannte Heizpatronen, bei denen mit Bezug auf Fig. 1 die Anschlüsse 5a bis 5d üblicherweise alle auf einer Seite der Vorrichtung angeordnet sind.

Gemäß Fig. 3 ist die Querschnittsfläche einer Kombination, die den ersten 2a und den zweiten Rohrheizkörper 2b umfasst, quer zur Längsrichtung des ersten 2a und des zweiten Rohrheizkörpers 2b oval ausgeführt. Jeder Rohrheizkörper 2a, 2b umfasst ein Mantelrohr 7a, 7b, das im Ausführungsbeispiel aus Aluminium oder einer Legierung hiervon hergestellt ist. Aus Fig. 3 ist weiterhin die Verbindungsfläche des ersten 2a und des zweiten Rohrheizkörper 2b zu erkennen, an denen die beiden Rohrheizkörper 2a, 2b miteinander verlötet sind. Die Verbindungsfläche 8 ist in dem Ausführungsbeispiel der Figuren 1 bis 3 eben ausgebildet. Bei dem in Fig. 4 dargestellten Ausführungsbeispiel sind die Rohrheizkörper 2a, 2b über eine metallische Zwischenplatte 9 thermisch miteinander gekoppelt, wobei die Rohrheizkörper 2a, 2b über diese Zwischenplatte 9 miteinander verlötet sind. Die Zwischenplatte 9 kann sich über einen Großteil der Längserstreckung der Rohrheizkörper 2a, 2b erstrecken. Bei Rohrheizkörpern mit einem streckenweise geraden Verlauf der Umfangslinie ist die Zwischenplatte bevorzugt (fast) ebenso breit wie diese.

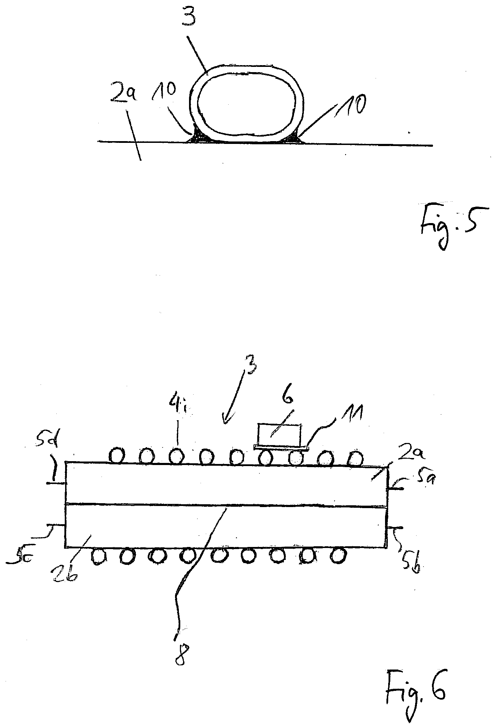

Während bei der Ausführungsform gemäß Fig. 2 das Durchflussrohr 3, wie erwähnt, einen runden Querschnitt aufweist, kann dieser, vergleiche Fig. 5, auch an der Seite zu den Rohrheizkörpern hin abgeflacht sein oder als Flachrohr ausgeführt sein. Fig. 5 lässt auch die Lötverbindung 10 zwischen Durchflussrohr 3 und Rohrheizkörper 2a erkennen. Die Windungen 4a, 4b, 4i des Durchflussrohrs 3 bilden eine Wendel, wobei die einzelnen Windungen aneinander anliegen können, vergleiche Fig. 1, oder voneinander beabstandet sein können, vergleiche Fig. 6. Bevorzugt beträgt der Abstand mindestens die Hälfte des Durchmessers des Durchflussrohrs 3, so dass eine qualitativ besonders hochwertige Verlötung erreicht werden kann. Die beiden Rohrheizkörper 2a, 2b können durch unterschiedliche Beschaltung, unterschiedliche Leistungsstufen und eine unterschiedliche Leistungsdichte realisiert sein. Bevorzugt ist hierbei eine nicht dargestellte Steuervorrichtung vorgesehen, wobei die Steuervorrichtung ausgebildet ist, den ersten und den zweiten Rohrheizkörper zumindest gemäß einem der folgenden Schaltzustände zu betreiben: Der erste Rohrheizkörper ist eingeschaltet, während der zweite Rohrheizkörper ausgeschaltet ist; der erste Rohrheizkörper ist ausgeschaltet, während der zweite Rohrheizkörper eingeschaltet ist; der erste und der zweite Rohrheizkörper sind in Serie zueinander geschaltet; und der erste und der zweite Rohrheizkörper sind parallel zueinander geschaltet.

Bei dem in Fig. 6 dargestellten Ausführungsbeispiel ist der Temperatursensor 6 über eine wärmeleitende Lasche 11 mit zwei Windungen 4 des Durchflussrohrs 3 verbunden. Auf diese Weise kann besonders zuverlässig ein "Trockengehen" des Durchflussrohrs 3 überwacht werden, da ein flüssigkeitsleeres Durchflussrohr 3 sehr schnell zu einer Temperaturerhöhung des Rohres und damit des Temperatursensors 6 führt.

Zur Feststellung eines Überhitzens sind bevorzugt mechanische Sicherungen in Serie zu den Rohrheizkörpern 2a, 2b vorgesehen, die die Vorrichtung beispielsweise vor einem Kurzschluss schützen.

Bei der Herstellung einer erfindungsgemäßem Heizvorrichtung gemäß einem bevorzugten Ausführungsbeispiel wird in einem ersten Bearbeitungsschritt zumindest der Mittenabschnitt jedes Rohrheizkörpers 2a, 2b in eine gewünschte Form gepresst. Hierdurch entsteht an jedem Rohrheizkörper 2a, 2b zumindest eine Kopplungsfläche 8. Die Enden der Rohrheizkörper werden bevorzugt voneinander weggebogen, so dass ein Anschließen der Anschlusselemente 5a bis d erleichtert wird. Anschließend werden die beiden Rohrheizkörper 2a, 2b entlang ihrer Kopplungsflächen 8 aneinander gelegt und anschließend mit dem Rohr 3, das bevorzugt aus Edelstahl ist, umwickelt. Bevorzugt wird in einem weiteren Schritt eine metallische Zwischenplatte 9 zwischen die Rohrheizkörper 2a, 2b eingeschoben. Durch die mit dem letzten Schritt einhergehende Vergrößerung des Querschnitts wird ein besonders guter Kontakt zwischen dem Rohr 3 und den Rohrheizkörpern 2a, 2b sichergestellt.

## Patentansprüche

1. Vorrichtung zum Erhitzen einer Flüssigkeit mit
- mindestens einem Rohr (3) zum Führen der Flüssigkeit;
- und mindestens einem ersten (2a) und einem zweiten Rohrheizkörper (2b), wobei jeder Rohrheizkörper eine Kopplungsfläche (8) in Längsrichtung aufweist,
wobei das Rohr (3) zur Übertragung von Wärmeenergie vom ersten (2a) und zweiten Rohrheizkörper (2b) auf das Rohr (3) mit dem ersten (2a) und dem zweiten Rohrheizkörper (2b) gekoppelt ist; wobei der erste (2a) und der zweite Rohrheizkörper (2b) entlang ihrer jeweiligen Kopplungsfläche (8) miteinander gekoppelt sind,
wobei das mindestens eine Rohr (3) eine Vielzahl von Windungen (4a, 4b, 4i) aufweist und derart zu dem ersten (2a) und dem zweiten Rohrheizkörper (2b) angeordnet ist, dass der erste (2a) und der zweite Rohrheizkörper (2b) gemeinsam von mindestens einer Windung der Vielzahl von Windungen (4a, 4b, 4i) umgeben sind.

2. Vorrichtung nach Anspruch 1,
**dadurch gekennzeichnet,**
**dass** die Kopplungsfläche (8) des ersten Rohrheizkörpers (2a) eine erste Kontur und die Kopplungsfläche (8) des zweiten Rohrheizkörpers (2b) eine zweite Kontur aufweist, wobei die erste und die zweite Kontur aneinander angepasst sind.

3. Vorrichtung nach einem der Ansprüche 1 oder 2,
**dadurch gekennzeichnet,**
**dass** die Kopplungsfläche (8) des ersten Rohrheizkörpers (2a) und die Kopplungsfläche (8) des zweiten Rohrheizkörpers (2b) eben ausgebildet sind.

4. Vorrichtung nach einem der vorhergehenden Ansprüche,
**dadurch gekennzeichnet,**
**dass** der erste (2a) und der zweite Rohrheizkörper (2b) miteinander verlötet sind.

5. Vorrichtung nach einem der vorhergehenden Ansprüche,
**dadurch gekennzeichnet,**
**dass** eine Kombination, die den ersten (2a) und den zweiten Rohrheizkörper (2b) umfasst, zumindest abschnittsweise eine Querschnittsfläche quer zur Längsrichtung des ersten (2a) und des zweiten Rohrheizkörpers (2b) aufweist, die oval, elliptisch oder rund ist.

6. Vorrichtung nach einem der vorhergehenden Ansprüche,
**dadurch gekennzeichnet,**
**dass** das Rohr (3) mit dem ersten (2a) und/oder dem zweiten Rohrheizkörper (2b) zumindest abschnittsweise verlötet ist.

7. Vorrichtung nach einem der vorhergehenden Ansprüche,
**dadurch gekennzeichnet,**
**dass** zwischen den ersten (2a) und den zweiten Rohrheizkörper (2b) eine Kopplungsvorrichtung (9) gekoppelt ist.

8. Vorrichtung nach Anspruch 7,
**dadurch gekennzeichnet,**
**dass** die Kopplungsvorrichtung (9) ein thermisches Kopplungselement, insbesondere ein Metallelement, darstellt.

9. Vorrichtung nach einem der vorhergehenden Ansprüche,
**dadurch gekennzeichnet,**
**dass** die Vorrichtung weiterhin einen Temperatursensor (6) umfasst.

10. Vorrichtung nach einem der vorhergehenden Ansprüche,
**dadurch gekennzeichnet,**
**dass** mindestens zwei Windungen der Vielzahl von Windungen (4a, 4b, 4i) des Rohrs (3) voneinander beabstandet angeordnet sind.

11. Vorrichtung nach einem der vorhergehenden Ansprüche,
**dadurch gekennzeichnet,**
**dass** das Rohr (3) als Flachrohr ausgebildet ist.

12. Vorrichtung nach einem der vorhergehenden Ansprüche,
**dadurch gekennzeichnet,**
**dass** der erste (2a) und der zweite Rohrheizkörper (2b) unterschiedliche Heizleistungen aufweisen.

13. Vorrichtung nach einem der vorhergehenden Ansprüche,
**dadurch gekennzeichnet,**
**dass** die Vorrichtung weiterhin eine Steuervorrichtung umfasst, wobei die Steuervorrichtung ausgebildet ist, den ersten (2a) und den zweiten Rohrheizkörper (2b) zumindest gemäß einem der folgenden Schaltzustände zu betreiben:
- der erste Rohrheizkörper (2a) ist eingeschaltet, der zweite Rohrheizkörper (2b) ist ausgeschaltet;
- der erste Rohrheizkörper (2a) ist ausgeschaltet, der zweite Rohrheizkörper (2b) ist eingeschaltet;
- der erste (2a) und der zweite Rohrheizkörper (2b) sind in Serie geschaltet;
- der erste (2a) und der zweite Rohrheizkörper (2b) sind parallel geschaltet.

14. Kaffeemaschine mit einer Vorrichtung nach einem der vorhergehenden Ansprüche.

15. Verfahren zur Herstellung einer Heizvorrichtung zum Erhitzen einer Flüssigkeit, **gekennzeichnet durch** folgende Schritte:
a) Bereitstellen eines ersten (2a) und eines zweiten Rohrheizkörpers (2b), wobei jeder Rohrheizkörper eine Kopplungsfläche (8) in Längsrichtung aufweist;
b) Aneinanderlegen der Kopplungsflächen (8) des ersten (2a) und des zweiten Rohrheizkörpers (2b); und
c) Umwickeln der aneinanderliegenden Rohrheizkörper (2a, 2b) mit einem Rohr (3) zum Führen der Flüssigkeit.

## Claims

1. Device for heating a liquid including
- at least one pipe (3) for carrying the liquid;
- and at least a first (2a) and a second pipe heater (2b), wherein each pipe heater has a coupling surface (8) in longitudinal direction,
wherein the pipe (3) is coupled to the first (2a) and the second pipe heater (2b) for transmitting thermal energy from the first (2a) and the second pipe heater (2b) to the pipe (3),
wherein the first (2a) and the second pipe heater (2b) are coupled to each other along their respective coupling surface (8),
wherein the at least one pipe (3) has a plurality of coils (4a, 4b, 4i) and is disposed to the first (2a) and the second pipe heater (2b) such that the first (2a) and the second pipe heater (2b) are commonly surrounded by at least one coil of the plurality of coils (4a, 4b, 4i).

2. Device according to claim 1,
**characterized in that**
the coupling surface (8) of the first pipe heater (2a) has a first contour and the coupling surface (8) of the second pipe heater (2b) has a second contour, wherein the first and the second contour are adapted to each other.

3. Device according to any one of claims 1 or 2,
**characterized in that**
the coupling surface (8) of the first pipe heater (2a) and the coupling surface (8) of the second pipe heater (2b) are flatly formed.

4. Device according to any one of the preceding claims,
**characterized in that**
the first (2a) and the second pipe heater (2b) are soldered to each other.

5. Device according to any one of the preceding claims,
**characterized in that**
a combination including the first (2a) and the second pipe heater (2b) has a cross-sectional area transverse to the longitudinal direction of the first (2a) and the second pipe heater (2b) at least in sections, which is oval, elliptical or round.

6. Device according to any one of the preceding claims,
**characterized in that**
the pipe (3) is soldered to the first (2a) and/or the second pipe heater (2b) at least in sections.

7. Device according to any one of the preceding claims,
**characterized in that**
a coupling device (9) is coupled between the first (2a) and the second pipe heater (2b).

8. Device according to claim 7,
**characterized in that**
the coupling device (9) represents a thermal coupling element, in particular a metal element.

9. Device according to any one of the preceding claims,
**characterized in that**
the device further includes a temperature sensor (6).

10. Device according to any one of the preceding claims,
**characterized in that**
at least two coils of the plurality of coils (4a, 4b, 4i) of the pipe (3) are disposed spaced from each other.

11. Device according to any one of the preceding claims,
**characterized in that**
the pipe (3) is formed as a flat pipe.

12. Device according to any one of the preceding claims,
**characterized in that**
the first (2a) and the second pipe heater (2b) have different heating powers.

13. Device according to any one of the preceding claims,
**characterized in that**
the device further includes a control device, wherein the control device is formed to operate the first (2a) and the second pipe heater (2b) at least according to one of the following switching states:
- the first pipe heater (2a) is switched on, the second pipe heater (2b) is switched off;
- the first pipe heater (2a) is switched off, the second pipe heater (2b) is switched on;
- the first (2a) and the second pipe heater (2b) are connected in series;
- the first (2a) and the second pipe heater (2b) are connected in parallel.

14. Coffee maker with a device according to any one of the preceding claims.

15. Method for producing a heating device for heating a liquid, **characterized by** the following steps:
a) providing a first (2a) and a second pipe heater (2b), wherein each pipe heater has a coupling surface (8) in longitudinal direction;
b) abutting the coupling surfaces (8) of the first (2a) and the second pipe heater (2b) on each other; and
c) wrapping the pipe heaters (2a, 2b) abutting on each other with a pipe (3) for carrying the liquid.

## Revendications

1. Appareil de chauffage d'un liquide avec
- au moins un tuyau (3), destiné à guider le liquide
- et au moins un premier (2a) et un second élément chauffant tubulaire (2b), chaque élément chauffant tubulaire présentant une surface de couplage (8) dans la direction longitudinale,
le tuyau (3) étant couplé, pour transmettre l'énergie thermique du premier (2a) et du second élément chauffant tubulaire (2b) sur le tuyau (3), avec le premier (2a) et le second élément chauffant tubulaire (2b) ;
le premier (2a) et le second élément chauffant tubulaire (2b) étant couplés l'un à l'autre le long de leur surface de couplage (8) respective,
le au moins un tuyau (3) présentant une multiplicité de spires (4a, 4b, 4i) et étant agencé sur le premier (2a) et le second élément chauffant tubulaire (2b) de telle sorte que le premier (2a) et le second élément chauffant tubulaire (2b) sont entourés en commun par au moins d'une spire de la multiplicité de spires (4a, 4b, 4i).

2. Appareil selon la revendication 1,
**caractérisé en ce**
**que** la surface de couplage (8) du premier élément chauffant tubulaire (2a) présente un premier contour et que la surface de couplage (8) du second élément chauffant tubulaire (2b) présente un second contour, le premier et le second contours étant adaptés l'un à l'autre.

3. Appareil selon l'une des revendications 1 ou 2,
**caractérisé en ce**
**que** la surface de couplage (8) du premier élément chauffant tubulaire (2a) et la surface de couplage (8) du second élément chauffant tubulaire (2b) sont constituées de manière plane.

4. Appareil selon l'une des revendications précédentes, **caractérisé en ce**
**que** le premier (2a) et le second élément chauffant tubulaire (2b) sont brasés l'un avec l'autre.

5. Appareil selon l'une des revendications précédentes, **caractérisé en ce**
**qu'**une combinaison, qui comprend le premier (2a) et le second élément chauffant tubulaire (2b), présente au moins par sections une surface transversale, transversalement à la direction longitudinale du premier (2a) et du second élément chauffant tubulaire (2b), qui est ovale, elliptique ou ronde.

6. Appareil selon l'une des revendications précédentes, **caractérisé en ce**
**que** le tuyau (3) est brasé au moins par sections avec le premier (2a) et / ou le second élément chauffant tubulaire (2b).

7. Appareil selon l'une des revendications précédentes, **caractérisé en ce**
**qu'**un appareil de couplage (9) est couplé entre le premier (2a) et le second élément chauffant tubulaire (2b).

8. Appareil selon la revendication 7,
**caractérisé en ce**
**que** l'appareil de couplage (9) représente un élément de couplage thermique, en particulier un élément métallique.

9. Appareil selon l'une des revendications précédentes, **caractérisé en ce**
**que** l'appareil comprend en outre un capteur de température (6).

10. Appareil selon l'une des revendications précédentes, **caractérisé en ce**
**qu'**au moins deux spires de la multiplicité de spires (4a, 4b, 4i) du tuyau (3) sont agencées écartées l'une de l'autre.

11. Appareil selon l'une des revendications précédentes, **caractérisé en ce**
**que** le tuyau (3) est constitué en tant que tuyau plat.

12. Appareil selon l'une des revendications précédentes, **caractérisé en ce**
**que** le premier (2a) et le second élément chauffant tubulaire (2b) présentent des puissances thermiques différentes.

13. Appareil selon l'une des revendications précédentes, **caractérisé en ce**
**que** l'appareil comprend en outre un appareil de commande, l'appareil de commande étant constitué pour exploiter le premier (2a) et le second élément chauffant tubulaire (2b) au moins conformément à l'un des états de commutation suivants :
- le premier élément chauffant tubulaire (2a) est en fonction, le second élément chauffant tubulaire (2b) est hors fonction ;
- le premier élément chauffant tubulaire (2a) est hors fonction, le second élément chauffant tubulaire (2b) est en fonction ;
- le premier (2a) et le second élément chauffant tubulaire (2b) sont reliés en série ;
- le premier (2a) et le second élément chauffant tubulaire (2b) sont reliés en parallèle.

14. Machine à café avec un appareil selon l'une des revendications précédentes.

15. Procédé de fabrication d'un appareil, destiné à chauffer un liquide, **caractérisé par** les étapes suivantes, consistant à :
a) mettre à disposition un premier (2a) et un second élément chauffant tubulaire (2b), chaque élément chauffant tubulaire présentant une surface de couplage (8) dans la direction longitudinale ;
b) juxtaposer les surfaces de couplage (8) du premier (2a) et du second élément chauffant tubulaire (2b) et
c) enrouler les éléments chauffants tubulaires (2a, 2b) adjacents avec un tuyau (3), destiné à guider le liquide.
